# FASCICULE DE BREVET EUROPEEN

(11) **EP 3 275 771 B1**
(45) Date de publication et mention de la délivrance du brevet: **17.04.2019**
(21) Numéro de dépôt: 17178137.0
(22) Date de dépôt: 27.06.2017
(51) Int. Cl.: B62H 3/04, B62H 3/08

(54) **DISPOSITIF PEMETTANT DE STATIONNER DES VELOS, ET ENSEMBLE D'ELEMENTS PERMETTANT DE CONSTITUER CE DISPOSITIF**
VORRICHTUNG ZUM ABSTELLEN VON FAHRRÄDERN, UND DIE ELEMENTE BENÖTIGT ZUM BILDEN DER VORRICHTUNG
DEVICE FOR PARKING BICYCLES, AND ELEMENTS MAKING IT POSSIBLE TO CONSTITUTE THIS DEVICE

(30) Priorité: 29.07.2016 FR 1657441
(43) Date de publication de la demande: 31.01.2018
(73) Titulaire: SEMCO SARL, 38110 Rochetoirin (FR)
(72) Inventeur: DESCOMBES, Pierre, 38730 BLANDIN (FR)
(74) Mandataire: Jeannet, Olivier

(56) Documents cités:
- DE-A1-102008 013 535
- DE-U1- 9 309 614
- FR-A1- 2 463 713

## Description

La présente invention concerne un dispositif permettant de stationner des vélos et un ensemble d'éléments permettant de constituer ce dispositif.

Des dispositifs permettant, dans une zone urbaine, de stationner des vélos sont connus de longue date. Notamment un dispositif connu est sous la forme d'une structure placée contre le sol, sur laquelle sont fixés des paires d'arceaux adjacents, de hauteurs réduites, aptes à recevoir entre eux la roue avant d'un vélo et à maintenir ce vélo dans une position plus ou moins dressée.

Ces dispositifs ont pour inconvénient important de ne pas toujours permettre un très bon maintien des vélos en position dressée, ce qui conduit certains vélos à s'incliner contre d'autres, au risque qu'il se produise un enchevêtrement de plusieurs vélos.

Le document DE 93 09 614 U1 décrit un dispositif comprenant :
- deux longerons, destinés à être placés contre une surface parallèlement l'un à l'autre ;
- une série d'embases fixées sur les deux longerons, en succession les unes des autres, chaque embase aménageant une ouverture de réception de la partie inférieure d'une roue d'un vélo ;
- une série de premiers montants fixés sur les longerons en succession les uns des autres, de façon alternée aux embases et de telle sorte qu'un premier montant soit disposé de façon immédiatement adjacente à un premier côté latéral d'une embase, ces premiers montants étant aptes à former un premier appui latéral pour la roue d'un vélo engagée dans ladite ouverture de réception, s'étendant jusqu'au-dessus de l'axe d'une roue de diamètre courant ;
- une série de deuxièmes montants fixés directement sur les embases, chaque deuxième montant étant apte à former un deuxième appui latéral pour la roue d'un vélo engagé dans ladite ouverture de réception, opposé audit premier appui latéral.

Ce dispositif ne présente pas l'inconvénient précité mais a par contre pour inconvénients essentiels de ne pas avoir une structure très optimale et de présenter des limitations importantes quant aux différentes configurations de dispositifs qu'il permet de constituer. Il en résulte que ce dispositif existant n'est pas facilement adaptable à l'environnement dans lequel il est installé, en particulier en termes de nombre d'emplacements de stationnement qu'il offre.

La présente invention a pour objectif de remédier à l'ensemble de ces inconvénients.

Le dispositif concerné comprend les caractéristiques précitées, connues par le document DE 93 09 614 U1, à savoir qu'il comprend :
- deux longerons, destinés à être placés contre une surface parallèlement l'un à l'autre ;
- une série d'embases fixées sur les deux longerons, en succession les unes des autres, chaque embase aménageant une ouverture de réception de la partie inférieure d'une roue d'un vélo ;
- une série de premiers montants fixés sur les longerons en succession les uns des autres, de façon alternée aux embases et de telle sorte qu'un premier montant soit disposé de façon immédiatement adjacente à un premier côté latéral d'une embase, ces premiers montants étant aptes à former un premier appui latéral pour la roue d'un vélo engagée dans ladite ouverture de réception, s'étendant jusqu'au-dessus de l'axe d'une roue de diamètre courant ;
- une série de deuxièmes montants fixés directement sur les embases, chaque deuxième montant étant apte à former un deuxième appui latéral pour la roue d'un vélo engagé dans ladite ouverture de réception, opposé audit premier appui latéral.

Selon l'invention, chaque deuxième montant est aménagé sous la forme d'une tige présentant plusieurs coudes, à savoir formant : une première portion inclinée, s'étendant substantiellement depuis l'extrémité antérieure de ladite ouverture de réception que forme l'embase associée à ce deuxième montant, puis, après un coude, formant une deuxième portion sensiblement verticale, située au-delà de l'extrémité postérieure de l'embase, redescendant en direction de l'embase, puis formant, après un coude, une troisième portion sensiblement horizontale, également située au-delà de l'extrémité postérieure de l'embase et s'étendant le long de celle-ci, puis formant, après un coude, une quatrième portion inclinée revenant au niveau de ladite extrémité postérieure de l'embase.

L'invention fournit ainsi un dispositif de stationnement de vélos permettant, grâce à l'engagement de la roue d'un vélo dans une ouverture formée par une embase, un bon calage longitudinal de la roue du vélo, et permettant simultanément, grâce auxdits premier et deuxième montants associés à cette embase, un bon maintien transversal du vélo sur le dispositif.

Il sera compris que le terme "latéral" désigne un côté d'une embase s'étendant parallèlement à la direction de mise en place ou de retrait d'une roue de vélo par rapport à l'embase.

Il sera également compris que le terme "transversal" désigne une direction perpendiculaire à cette direction de mise en place ou de retrait, donc la direction selon laquelle un vélo tend à s'incliner lorsqu'il est mal maintenu en position verticale.

Il sera aussi compris que l'expression "roue de diamètre courant" désigne une roue ayant un diamètre de l'ordre de 50 à 80 centimètres.

La tige coudée précitée permet, par l'extension verticale qu'elle forme au moyen desdites première et deuxième portions, d'aménager l'appui latéral précité pour la roue d'un vélo ; au moyen de ladite troisième portion sensiblement horizontale, cette tige coudée permet de constituer une butée longitudinale pour la roue d'un vélo, venant limiter le mouvement d'engagement longitudinal d'un vélo dans l'emplacement de stationnement qui est formé par ladite embase, ledit premier montant et ladite tige coudée associés à cette embase.

Il sera compris que les termes "antérieure" et "postérieure" sont à considérer par rapport au mouvement d'engagement de la roue d'un vélo dans cet emplacement de stationnement, l'extrémité "antérieure" étant celle qui est franchie par la roue du vélo lorsque cette roue vient en engagement dans ladite ouverture.

De préférence, le dispositif comprend :
- une première série d'embases, présentant des parties de fixation aux longerons ayant une première hauteur, réduite ;
- une deuxième série d'embases, présentant des parties de fixation aux longerons ayant une deuxième hauteur, plus importante que ladite première hauteur ;
- une première série de premiers montants destinés à être associés à ladite première série d'embases ; chaque premier montant de cette première série est formé par une pièce distincte et séparée d'une embase de ladite première série d'embases et est destiné à être relié directement aux longerons ; chaque premier montant de cette première série présente une hauteur de l'ordre de 50 à 70 centimètres de sorte qu'il s'étend jusqu'au niveau de la partie supérieure de la roue d'un vélo de diamètre courant, placée sur une embase adjacente de ladite première série ; et
- une deuxième série de premiers montants destinés à être associés à ladite deuxième série d'embases ; chaque premier montant de cette deuxième série est formé par une pièce distincte et séparée d'une embase de ladite deuxième série d'embases et est destiné à être relié directement aux longerons ; chaque premier montant de cette deuxième série a une hauteur supérieure à celle des premiers montants de ladite première série ; chaque premier montant de cette deuxième série présente une hauteur de l'ordre de 70 à 90 centimètres de sorte qu'il s'étend jusqu'au niveau de la partie supérieure de la roue d'un vélo de diamètre courant, placée sur une embase adjacente de ladite deuxième série ;
   des premiers montants et des embases desdites premières séries sont, au long des longerons, alternés avec des premiers montants et des embases desdites deuxièmes séries, de façon à constituer des emplacements de stationnement de hauteurs différentes, des emplacements d'une première hauteur étant alternés avec des emplacements d'une deuxième hauteur.

Ces emplacements de stationnement de hauteurs différentes permettent de stationner deux vélos côte à côte lorsque ces vélos comportent un panier en avant du guidon, comme c'est le cas, de plus en plus fréquemment, des vélos en libre-service. Il en résulte une possibilité de gagner sur la longueur utile d'un dispositif, telle que la longueur totale d'un dispositif soit limitée à environ deux mètres, faisant que le dispositif puisse être intégré dans la largeur d'une place de stationnement précédemment affectée à des véhicules particuliers.

Selon une forme de réalisation préférée de l'invention, les moyens de fixation respectifs que comprend chaque embase pour sa fixation aux longerons permettent la fixation de l'embase selon deux positions de montage possibles de cette embase sur les longerons, dont une position est tête-bêche par rapport à l'autre.

Un premier côté longitudinal d'une embase est donc, dans une première position, apte à être fixé à un premier longeron tandis que le deuxième côté longitudinal de cette embase est apte à être fixé au deuxième longeron, et, dans une deuxième position tête-bêche par rapport à ladite première position, est apte à être fixé audit deuxième longeron tandis que le deuxième côté longitudinal de cette embase est apte à être fixé audit premier longeron.

Cette réversibilité de montage des embases, et des deuxièmes montants fixés à elles, permet de constituer un dispositif dont certains emplacements de stationnement ont des entrées s'ouvrant sur un premier côté latéral du dispositif et dont les autres emplacements de stationnement ont des entrées s'ouvrant sur le deuxième côté latéral du dispositif, opposé au premier côté latéral.

En combinaison avec la possibilité de constituer des emplacements de stationnement de hauteurs différentes, le dispositif selon l'invention est ainsi parfaitement adaptable à son environnement d'installation.

Selon une forme de réalisation préférée de l'invention, chaque embase est constituée par une tôle pliée en U, c'est-à-dire formant une paroi centrale dans laquelle est aménagée ladite ouverture de réception et deux parois de côté destinées, en position de montage, à venir à proximité immédiate des longerons et à être fixées à ceux-ci.

Pour ne pas risquer de détériorer le pneumatique de la roue d'un vélo, avantageusement, les bords de chaque embase délimitant les extrémités longitudinales antérieure et postérieure de l'ouverture de réception que forme cette embase sont équipés de portions arrondies, ces portions arrondies étant légèrement décalées du côté de l'intérieur de l'ouverture par rapport auxdits bords.

Le pneumatique de la roue d'un vélo porte ainsi contre ces portions arrondies lorsque la roue est engagée dans ladite ouverture de réception, lesquelles portions arrondies ne sont pas agressives pour ce pneumatique.

Avantageusement, ces portions arrondies sont aménagées par des portions respectives d'extrémité de ladite tige coudée, fixées à l'embase au niveau du bord antérieur et du bord postérieur de ladite ouverture de réception.

Selon une forme de réalisation préférée de l'invention, chaque premier montant est sous la forme d'un arceau en forme de U inversé, dont les extrémités libres des branches sont fixées auxdits longerons.

Cet arceau permet, en plus de l'appui du vélo qu'il permet, une attache efficace et sécurisante du cadre d'un vélo et de la roue avant de ce vélo.

Cet arceau est avantageusement relié à ladite tige coudée au moyen d'une patte solidaire de cette tige coudée et d'un boulon traversant un trou aménagé dans cette patte et au travers d'un trou aménagé dans la branche correspondante de l'arceau.

L'invention concerne également l'ensemble d'éléments permettant de constituer le dispositif de stationnement décrit plus haut, qui comprend :
- des longerons destinés à être placés contre une surface parallèlement l'un à l'autre ;
- une série d'embases fixées sur les deux longerons, en succession les unes des autres, chaque embase aménageant une ouverture de réception de la partie inférieure d'une roue d'un vélo ;
- une série de premiers montants fixés sur les longerons en succession les uns des autres, de façon alternée aux embases et de telle sorte qu'un premier montant soit disposé de façon immédiatement adjacente à un premier côté latéral d'une embase, ces premiers montants étant aptes à former un premier appui latéral pour la roue d'un vélo engagée dans ladite ouverture de réception, s'étendant jusqu'au-dessus de l'axe d'une roue de diamètre courant ;
- une série de deuxièmes montants fixés directement sur les embases ; chaque deuxième montant est apte à former un deuxième appui latéral pour la roue d'un vélo engagé dans ladite ouverture de réception, opposé audit premier appui latéral ; chaque deuxième montant est aménagé sous la forme d'une tige présentant plusieurs coudes, à savoir formant : une première portion inclinée, s'étendant substantiellement depuis l'extrémité antérieure de ladite ouverture de réception que forme l'embase associée à ce deuxième montant, puis, après un coude, formant une deuxième portion sensiblement verticale, située au-delà de l'extrémité postérieure de l'embase, redescendant en direction de l'embase, puis formant, après un coude, une troisième portion sensiblement horizontale, également située au-delà de l'extrémité postérieure de l'embase et s'étendant le long de celle-ci, puis formant, après un coude, une quatrième portion inclinée revenant au niveau de ladite extrémité postérieure de l'embase ;
- les moyens de fixation des premiers montants et des embases sont sous la forme :
   - de trous aménagés dans ces premiers montants, embases et possiblement deuxièmes montants,
   - de séries de trous régulièrement aménagés au long des longerons, et
   - de boulons aptes à être engagés au travers de ces différents trous.

Ces trous et boulons permettent une modularité des différents éléments les uns par rapport aux autres, et permettent donc de constituer des dispositifs sur lesquels des nombres différents d'emplacements de stationnement sont aménagés, selon le nombre d'ensembles embase / premier montant / deuxième montant qui sont mis en place sur une paire de longerons. Grâce à ce caractère modulaire des éléments, il est possible de constituer des dispositifs parfaitement adaptés aux besoins des utilisateurs et des emplacements d'installation de ces dispositifs.

Bien entendu, pour interdire tout démontage non autorisé, les boulons sont bloqués par tout moyen connu, notamment par collage.

L'invention sera bien comprise, et d'autres caractéristiques et avantages de celle-ci apparaîtront, en référence au dessin schématique annexé, ce dessin représentant, à titre d'exemples non limitatifs, deux formes de réalisation possible du dispositif de stationnement concerné.

La figure 1 est une vue en perspective d'une première forme de réalisation de ce dispositif de stationnement, incluant quatre emplacements de stationnement ;
la figure 2 en est une vue partielle, également en perspective, partiellement éclatée ;
la figure 3 en est une vue partielle, de côté ;
la figure 4 en est une vue par une extrémité longitudinale ;
la figure 5 en est une vue partielle, de dessus ;
la figure 6 en est une vue de côté, similaire à la figure 3, selon une deuxième forme de réalisation incluant huit emplacements de stationnement, avec un vélo placé dans l'un de ces emplacements ;
la figure 7 en est une vue par une extrémité longitudinale, sans aucun vélo ;
la figure 8 en est une vue de dessus, avec deux vélos dans deux emplacements s'ouvrant sur des côtés opposés du dispositif ;
la figure 9 en est une vue en coupe transversale similaire à la figure 7, montrant un vélo engagé dans un premier emplacement de stationnement d'une première hauteur ; et
la figure 10 en est une vue similaire à la figure 9, montrant un vélo engagé dans un deuxième emplacement de stationnement, d'une deuxième hauteur.

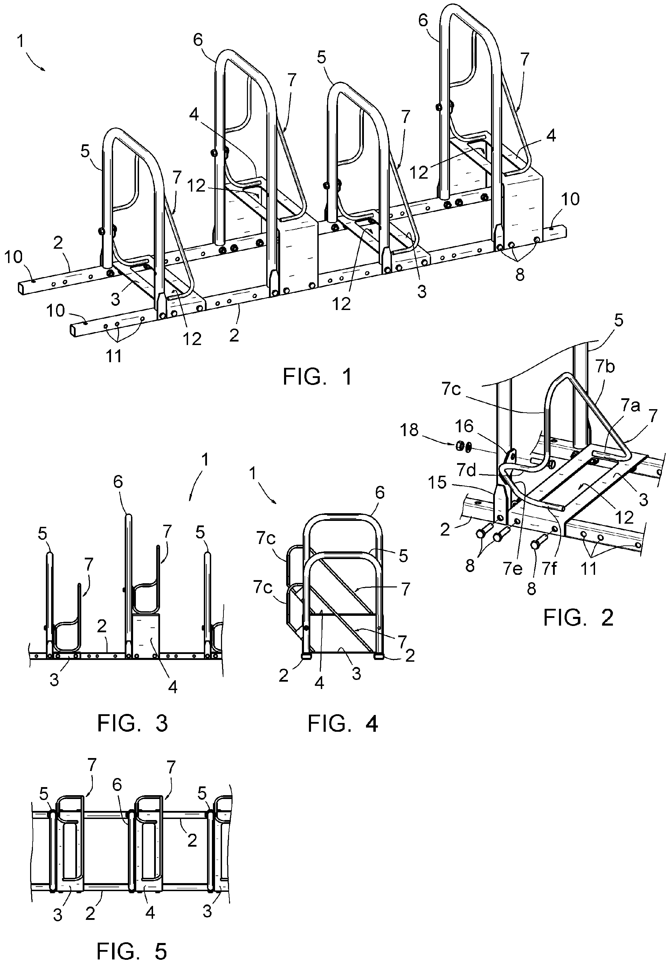

Les figures 1 à 5 représentent un dispositif 1 de stationnement de vélos comprenant deux longerons 2 destinés à être fixés au sol, deux séries d'embases 3, 4 de réception de roues de vélo, de hauteurs différentes d'une série à l'autre, deux séries d'arceaux 5, 6 ayant également des hauteurs différentes d'une série d'arceaux 5 à une autre série d'arceaux 6, des tiges coudées 7, soudées sur les embases 3, 4, et des boulons 8 d'assemblage.

Chaque ensemble formé par une embase 3, l'arceau 5 adjacent à cette embase et la tige coudée 7 surmontant cette embase forme un emplacement de stationnement d'un vélo, et, de la même façon, chaque ensemble formé par une embase 4, l'arceau 6 adjacent à cette embase et la tige coudée 7 surmontant cette embase forme un autre emplacement de stationnement d'un vélo.

Les longerons 2 sont formés par des profilés, notamment de section transversale carrée ou rectangulaire. Ils sont notamment en matériau métallique, de même que toutes les autres pièces du dispositif 1.

Dans l'exemple représenté, les longerons 2 sont transpercés de trous 10 à leurs extrémités, orientés perpendiculairement au sol à l'état d'assemblage du dispositif 1. Ces trous sont destinés à recevoir des goujons (non représentés), ou autres types de moyens d'ancrage, permettant l'ancrage de ces longerons 2 au sol.

Les longerons 2 sont également percés, sur leur longueur, transversalement à leur hauteur, de huit séries régulières de trois trous 11, qui sont identiques d'un longeron 2 à l'autre et qui sont aménagées en regard les unes des autres d'un longeron 2 à l'autre. Dans une série de ces trous 11, deux trous sont destinés à recevoir des boulons 8 de montage d'une paroi de côté que forme une embase 3 ou 4, et le troisième trou 11 est destiné à recevoir un boulon 8 de montage de l'un des pieds d'un arceau 5, 6, et, comme cela est particulièrement visible sur la figure 2.

Chaque embase 3, 4 est constituée par une tôle pliée en U, c'est-à-dire formant une paroi centrale et deux parois de côté.

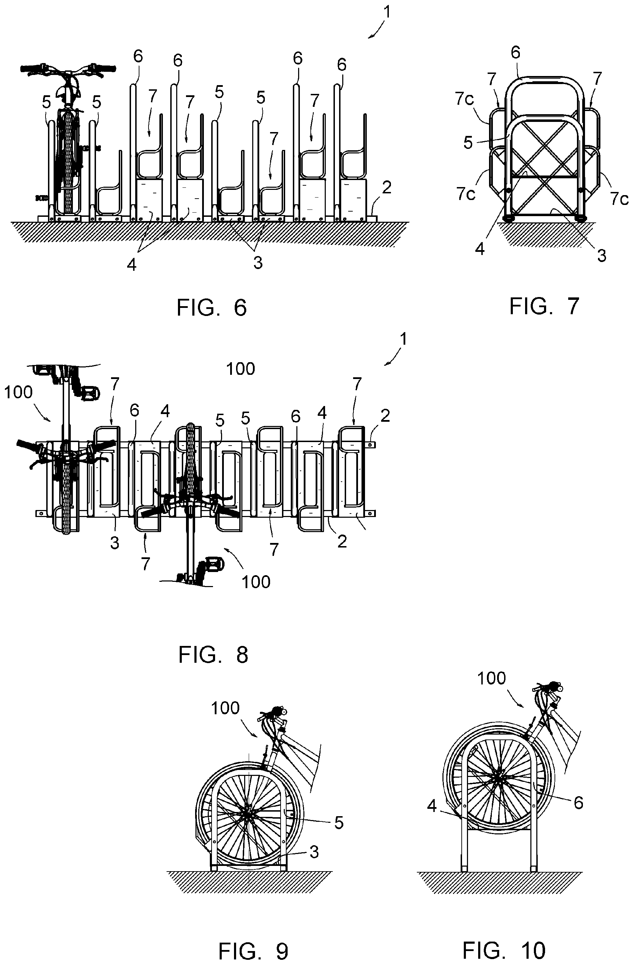

La paroi centrale de chaque embase 3, 4 est rectangulaire et présente une ouverture 12 elle-même rectangulaire, de réception de la partie inférieure d'une roue d'un vélo, comme visible sur les figures 7 à 10.

Les parois de côté sont destinées, en position de montage, à venir à proximité immédiate des longerons 2 et à être fixées à ceux-ci. Elles présentent des trous permettant le boulonnage de l'embase 3, 4 aux longerons 2. Les parois de côté des embases 3 de la première série d'embases ont une hauteur réduite, de l'ordre de 4 à 5 cm, telle que les parois centrales de ces embases 3 reposent contre la face supérieure des longerons 2, tandis que les parois de côté des embases 4 de la deuxième série d'embases ont une hauteur nettement plus importante, de l'ordre de 20 à 30 cm.

Les embases 3, 4 sont fixées aux longerons 2 en succession les unes des autres au long de la longueur de ces longerons ; dans l'exemple de réalisation montré sur les figures 1 à 5, les deuxièmes et sixièmes séries de trous 11 depuis les extrémités des longerons 2 représentées sur la gauche de la figure 1 reçoivent des embases 3 de faible hauteur, tandis que les quatrième et huitième séries de trous 11 reçoivent des embases 4 de plus forte hauteur, faisant que le dispositif 1 représenté sur ces figures 1 à 5 forme quatre emplacements de stationnement de vélos. Dans l'exemple de réalisation montrée sur les figures 6 à 8, toutes les séries de trous 11 reçoivent des embases 3, 4, de sorte que le dispositif 1 selon cette deuxième forme de réalisation forme huit emplacements de stationnement de vélos 100 ; depuis l'extrémité représentée sur la gauche de la figure 6 ; dans l'exemple représenté, depuis cette extrémité, les longerons reçoivent deux embases 3 de faible hauteur puis deux embases 4 de plus forte hauteur puis à nouveau deux embases 3 et deux embases 4.

En outre, du fait que les séries de trous 11 sont identiques d'un longeron 2 à l'autre, et qu'il en est de même pour les trous que présentent les parois de côté des embases 3, 4, il est possible de fixer une embase 3, 4 selon deux positions de montage possibles sur les longerons 2, tête-bêche d'une position à l'autre ; ainsi, dans l'exemple représenté sur les figures 1 à 5, les portions antérieures des ouvertures 12 sont toutes situées sur un même côté du dispositif 1, avec toutes les tiges 7 disposées dans le même sens ; dans l'exemple représenté sur les figures 6 à 8, les portions antérieures des ouvertures 12 sont situées de manière alternée sur un côté et sur l'autre du dispositif 1, faisant que les tiges 7 sont disposées dans des sens opposés (voir particulièrement la figure 7).

Les arceaux 5, 6 ont une forme en U inversé, et les extrémités de leurs branches de côté sont solidaires de pattes 15 percées de trous, permettant leur fixation aux longerons 2 de telle sorte qu'un arceau 5, 6 soit disposé de façon immédiatement adjacente à un premier côté latéral de l'embase 3 ou 4 reliée à la même série de trous 11 que lui.

Chaque arceau 5 de la première série d'arceaux est destiné à être associé à une embase 3 de plus faible hauteur, et présente une hauteur de l'ordre d'une soixantaine de centimètres ; cet arceau 5 s'étend ainsi jusqu'au niveau de la partie supérieure de la roue d'un vélo 100 de diamètre courant, placée sur l'embase 3 adjacente, comme cela est visible sur la figure 9. Chaque arceau 6 de la deuxième série d'arceaux est destiné à être associé à une embase 4 de plus forte hauteur, et présente une hauteur de l'ordre de 85 centimètres ; il s'étend ainsi également jusqu'au niveau de la partie supérieure de la roue d'un vélo 100 de diamètre courant, placée sur l'embase 4 adjacente, comme cela est visible sur la figure 10.

Il apparaît plus particulièrement sur la figure 2 que chaque tige coudée 7 est de section cylindrique et qu'elle est plusieurs fois coudée de façon à former, depuis le côté antérieur de l'ouverture 12 vers le côté postérieur de cette ouverture :
- une première portion d'extrémité 7a, s'étendant le long du bord de l'embase 3 délimitant le côté antérieur de l'ouverture de réception, en étant légèrement en débord vers le côté interne de l'ouverture 12, cette première portion d'extrémité 7a étant soudée à l'embase 3 ;
- après un coude, une première portion inclinée 7b, s'étendant substantiellement depuis l'extrémité antérieure de ladite ouverture 12 jusqu'à environ l'aplomb de l'extrémité postérieure de la paroi centrale de l'embase, puis,
- après un double coude, une deuxième portion 7c sensiblement verticale, située au-delà de l'extrémité postérieure de l'embase 3 (voir figure 4), redescendant en direction de l'embase, puis,
- après un coude, une troisième portion 7d sensiblement horizontale, également située au-delà de l'extrémité postérieure de l'embase 3 et le long de celle-ci, puis,
- après un coude, une quatrième portion 7e inclinée revenant au niveau de ladite extrémité postérieure de l'embase 3, et
- après un coude, une deuxième portion d'extrémité 7f, s'étendant le long du bord de l'embase 3 délimitant le côté postérieur de l'ouverture de réception, en étant légèrement en débord vers le côté interne de l'ouverture 12, cette deuxième portion d'extrémité 7f étant soudée à l'embase 3.

Les tiges coudées 7 associés aux embases 4 ont exactement la même structure que celle qui vient d'être décrite, et sont également reliées aux embases 4 par soudure, de la même façon.

En outre, ladite quatrième portion 7e est solidaire d'une patte 16 permettant la fixation de l'arceau 5 ou 6 à la tige 7 au moyen d'un boulon 18.

En pratique, l'un ou l'autre des dispositifs 1 représentés, ou d'autres dispositifs ayant d'autres structures, peuvent être constitués à partir d'un ensemble d'éléments incluant les longerons 2, les ensembles embases 3, 4 / tiges coudées 7 et les arceaux 5, 6, par mise en place de ces différents éléments sur les longerons 2 et par fixation au moyen des boulons 8 et blocage de ces boulons au moyen notamment de colle.

Le dispositif 1 selon l'invention présente les avantages déterminants :
- de permettre un très bon maintien des vélos 100 en position dressée, compte tenu de l'engagement de la base des roues dans les ouvertures 12, de la hauteur des arceaux 5 et 6 et des appuis latéraux formés par ces arceaux 5 et 6 et par les tiges 7, comme visible sur les figures 8 à 10, prévenant efficacement l'inclinaison de certains vélos 100 contre d'autres ;
- de permettre de stationner deux vélos 100 côte à côte lorsque ces vélos comportent un panier en avant du guidon, comme c'est le cas, de façon très générale, des vélos en libre-service, grâce au décalage en hauteur des embases 3, 4 et / ou de la possibilité d'inverser les positions des embases 3, 4 ;
- d'être facilement adaptable à l'environnement dans lequel il est installé, en particulier en termes de nombre d'emplacements de stationnement qu'il offre et d'orientation des ouvertures de ces emplacements.

## Revendications

1. Dispositif (1) permettant de stationner des vélos (100), comprenant :
- deux longerons (2), destinés à être placés contre une surface parallèlement l'un à l'autre ;
- une série d'embases (3, 4) fixées sur les deux longerons (2), en succession les unes des autres, chaque embase (3, 4) aménageant une ouverture (12) de réception de la partie inférieure d'une roue d'un vélo (100) ;
- une série de premiers montants (5, 6) fixés sur les longerons (2) en succession les uns des autres, de façon alternée aux embases (3, 4) et de telle sorte qu'un premier montant (5, 6) soit disposé de façon immédiatement adjacente à un premier côté latéral d'une embase (3, 4), ces premiers montants (5, 6) étant aptes à former un premier appui latéral pour la roue d'un vélo (100) engagée dans ladite ouverture de réception (12), s'étendant jusqu'au-dessus de l'axe d'une roue de diamètre courant ;
- une série de deuxièmes montants (7) fixés directement sur les embases (3, 4),
chaque deuxième montant (7) étant apte à former un deuxième appui latéral pour la roue d'un vélo (100) engagé dans ladite ouverture de réception (12), opposé audit premier appui latéral ;
**caractérisé en ce que** chaque deuxième montant est aménagé sous la forme d'une tige (7) présentant plusieurs coudes, à savoir formant : une première portion inclinée (7b), s'étendant substantiellement depuis l'extrémité antérieure de ladite ouverture de réception (12) que forme l'embase (3, 4) associée à ce deuxième montant, puis, après un coude, formant une deuxième portion (7c) sensiblement verticale, située au-delà de l'extrémité postérieure de l'embase (3, 4), redescendant en direction de l'embase, puis formant, après un coude, une troisième portion (7d) sensiblement horizontale, également située au-delà de l'extrémité postérieure de l'embase (3, 4) et s'étendant le long de celle-ci, puis formant, après un coude, une quatrième portion inclinée (7e) revenant au niveau de ladite extrémité postérieure de l'embase (3, 4).

2. Dispositif (1) selon la revendication 1, **caractérisé en ce qu'**il comprend :
- une première série d'embases (3), présentant des parties de fixation aux longerons (2) ayant une première hauteur, réduite ;
- une deuxième série d'embases (4), présentant des parties de fixation aux longerons (2) ayant une deuxième hauteur, plus importante que ladite première hauteur ;
- une première série de premiers montants (5) destinés à être associés à ladite première série d'embases (3) ; chaque premier montant (5) de cette première série est formé par une pièce distincte et séparée d'une embase (3) de ladite première série d'embases et est destiné à être relié directement aux longerons (2) ; chaque premier montant (5) de cette première série présente une hauteur de l'ordre de 50 à 70 centimètres de sorte qu'il s'étend jusqu'au niveau de la partie supérieure de la roue d'un vélo (100) de diamètre courant, placée sur une embase (3) adjacente de ladite première série ; et
- une deuxième série de premiers montants (6) destinés à être associés à ladite deuxième série d'embases (4) ; chaque premier montant (6) de cette deuxième série est formé par une pièce distincte et séparée d'une embase (4) de ladite deuxième série d'embases et est destiné à être relié directement aux longerons (2) ; chaque premier montant de cette deuxième série a une hauteur supérieure à celle des premiers montants (5) de ladite première série ; chaque premier montant (6) de cette deuxième série présente une hauteur de l'ordre de 70 à 90 centimètres de sorte qu'il s'étend jusqu'au niveau de la partie supérieure de la roue d'un vélo (100) de diamètre courant, placée sur une embase (4) adjacente de ladite deuxième série ;
des premiers montants (5) et des embases (3) desdites premières séries sont, au long des longerons (2), alternés avec des premiers montants (6) et des embases (4) desdites deuxièmes séries, de façon à constituer des emplacements de stationnement de hauteurs différentes, des emplacements d'une première hauteur étant alternés avec des emplacements d'une deuxième hauteur.

3. Dispositif (1) selon la revendication 1 ou la revendication 2, **caractérisé en ce que** les moyens de fixation respectifs que comprend chaque embase (3, 4) pour sa fixation aux longerons (2) permettent la fixation de l'embase selon deux positions de montage possibles de cette embase sur les longerons (2), dont une position est tête-bêche par rapport à l'autre.

4. Dispositif (1) selon l'une des revendications 1 à 3, **caractérisé en ce que** chaque embase (3, 4) est constituée par une tôle pliée en U, c'est-à-dire formant une paroi centrale dans laquelle est aménagée ladite ouverture de réception (12) et deux parois de côté destinées, en position de montage, à venir à proximité immédiate des longerons (2) et à être fixées à ceux-ci.

5. Dispositif (1) selon l'une des revendications 1 à 4, **caractérisé en ce que** les bords de chaque embase (3, 4) délimitant les extrémités longitudinales antérieure et postérieure de l'ouverture de réception (12) que forme cette embase sont équipés de portions arrondies (7a, 7f), ces portions arrondies étant légèrement décalées du côté de l'intérieur de l'ouverture (12) par rapport auxdits bords.

6. Dispositif (1) selon la revendication 5, **caractérisé en ce que** lesdites portions arrondies (7a, 7f) sont aménagées par des portions respectives d'extrémité de ladite tige coudée (7), fixées à l'embase (3, 4) au niveau du bord antérieur et du bord postérieur de ladite ouverture de réception (12).

7. Dispositif (1) selon l'une des revendications 1 à 6, **caractérisé en ce que** chaque premier montant (5, 6) est sous la forme d'un arceau en forme de U inversé, dont les extrémités libres des branches sont fixées auxdits longerons (2).

8. Dispositif (1) selon la revendication 7, **caractérisé en ce que** ledit arceau (5, 6) est relié à ladite tige coudée (7) au moyen d'une patte (16) solidaire de cette tige coudée et d'un boulon (18) traversant un trou aménagé dans cette patte (16) et au travers d'un trou aménagé dans la branche correspondante de l'arceau (5, 6).

9. Ensemble d'éléments permettant de constituer le dispositif selon l'une des revendications 1 à 8, comprenant :
- des longerons (2) destinés à être placés contre une surface parallèlement l'un à l'autre ;
- une série d'embases (3, 4) fixées sur les deux longerons (2), en succession les unes des autres, chaque embase (3, 4) aménageant une ouverture (12) de réception de la partie inférieure d'une roue d'un vélo (100) ;
- une série de premiers montants (5, 6) fixés sur les longerons (2) en succession les uns des autres, de façon alternée aux embases (3, 4) et de telle sorte qu'un premier montant (5, 6) soit disposé de façon immédiatement adjacente à un premier côté latéral d'une embase (3, 4), ces premiers montants (5, 6) étant aptes à former un premier appui latéral pour la roue d'un vélo (100) engagée dans ladite ouverture de réception (12) ;
- une série de deuxièmes montants (7) fixés directement sur les embases (3, 4) ; chaque deuxième montant (7) est apte à former un deuxième appui latéral pour la roue d'un vélo (100) engagé dans ladite ouverture de réception (12), opposé audit premier appui latéral ;
**caractérisé en ce que** :
- chaque deuxième montant est aménagé sous la forme d'une tige (7) présentant plusieurs coudes, à savoir formant : une première portion inclinée (7b), s'étendant substantiellement depuis l'extrémité antérieure de ladite ouverture de réception (12) que forme l'embase (3, 4) associée à ce deuxième montant, puis, après un coude, formant une deuxième portion (7c) sensiblement verticale, située au-delà de l'extrémité postérieure de l'embase (3, 4), redescendant en direction de l'embase, puis formant, après un coude, une troisième portion (7d) sensiblement horizontale, également située au-delà de l'extrémité postérieure de l'embase (3, 4) et s'étendant le long de celle-ci, puis formant, après un coude, une quatrième portion inclinée (7e) revenant au niveau de ladite extrémité postérieure de l'embase (3, 4)
- les moyens de fixation des premiers montants (5, 6) et des embases (3, 4) aux longerons (2) sont sous la forme :
- de trous aménagés dans ces premiers montants, embases et possiblement deuxièmes montants,
- de séries de trous (11) régulièrement aménagés au long des longerons (2), et
- de boulons (8) aptes à être engagés au travers de ces différents trous (11).

## Patentansprüche

1. Vorrichtung (1) zum Parken von Fahrrädern (100), umfassend:
- zwei Längsträger (2), die dazu bestimmt sind, gegen eine Fläche parallel zueinander angeordnet zu werden;
- eine Reihe von Basen (3, 4), die nacheinander an den beiden Längsträgern (2) befestigt sind, wobei jede Basis (3, 4) eine Öffnung (12) zur Aufnahme des unteren Teils eines Rades eines Fahrrads (100) vorsieht;
- eine Reihe von ersten Ständern (5, 6), die nacheinander an den Längsträgern (2), abwechselnd an den Sockeln (3, 4) und derart befestigt sind, dass ein erster Ständer (5, 6) unmittelbar neben einer ersten seitlichen Seite einer Basis (3, 4) angeordnet ist, wobei diese ersten Ständer (5, 6) in der Lage sind, eine erste seitliche Stütze für das Rad eines Fahrrads (100) zu bilden, das in die Aufnahmeöffnung (12) eingreift und sich bis über die Achse eines Rades mit einem aktuellen Durchmesser erstreckt;
- eine Reihe von zweiten Ständern (7), die direkt an den Basen (3, 4) befestigt sind, wobei jeder zweite Ständer (7) in der Lage ist, eine zweite seitliche Halterung für das Rad eines Fahrrads (100) zu bilden, das in die Aufnahmeöffnung (12) eingreift, gegenüber der ersten seitlichen Halterung;
**dadurch gekennzeichnet, dass** jeder zweite Ständer in Form einer gebogenen Stange (7) mit mehreren gebogenen Abschnitten, nämlich Bilden, angeordnet ist: einen ersten geneigten Abschnitt (7b), der sich im Wesentlichen von dem vorderen Ende der Aufnahmeöffnung (12) erstreckt, die durch die dem zweiten Ständer zugeordnete Basis (3, 4) gebildet wird, und dann, nach einem gebogenen Abschnitt, einen zweiten im Wesentlichen vertikalen Abschnitt (7c) bildet, der sich hinter dem hinteren Ende der Basis (3, 4) befindet, Absenken in Richtung der Basis, dann Bilden eines dritten im Wesentlichen horizontalen Abschnitts (7d) nach einem gebogenen Abschnitt, der sich ebenfalls über das hintere Ende der Basis (3, 4) hinaus befindet und sich entlang dieser erstreckt, und dann Bilden eines vierten geneigten Abschnitts (7e) nach einem gebogenen Abschnitt, der zu dem hinteren Ende der Basis (3, 4) zurückkehrt.

2. Vorrichtung (1) nach Anspruch 1, **dadurch gekennzeichnet, dass** sie umfasst:
- eine erste Reihe von Basen (3), die Teile zur Befestigung an den Längsträgern (2) mit einer ersten, reduzierten Höhe aufweisen;
- eine zweite Reihe von Basen (4), die Teile zur Befestigung an den Längsträgern (2) mit einer zweiten Höhe aufweisen, die größer als die erste Höhe ist;
- eine erste Reihe von ersten Pfosten (5), die dazu bestimmt sind, der ersten Reihe von Basen (3) zugeordnet zu werden; jeder erste Pfosten (5) dieser ersten Reihe wird durch einen Teil gebildet, der von einer Basis (3) der ersten Reihe von Basen getrennt und verschieden ist, und ist dazu bestimmt, direkt mit den Längsträgern (2) verbunden zu werden; jeder erste Ständer (5) dieser ersten Serie eine Höhe in der Größenordnung von 50 bis 70 Zentimetern aufweist, so dass er sich bis auf die Höhe des oberen Teils des Rades eines Fahrrads (100) mit aktuellem Durchmesser erstreckt, das auf einer benachbarten Basis (3) der ersten Serie platziert ist; und
- eine zweite Reihe von ersten Pfosten (6), die dazu bestimmt sind, der zweiten Reihe von Basen (4) zugeordnet zu werden; jeder erste Pfosten (6) dieser zweiten Reihe wird durch einen Teil gebildet, der von einer Basis (4) der zweiten Reihe von Basen getrennt und verschieden ist, und ist dazu bestimmt, direkt mit den Längsträgern (2) verbunden zu werden; jeder erste Ständer dieser zweiten Serie eine höhere Höhe aufweist als die ersten Ständer (5) der ersten Serie; jeder erste Ständer (6) dieser zweiten Serie eine Höhe in der Größenordnung von 70 bis 90 Zentimetern aufweist, so dass er sich bis zur Höhe des oberen Teils des Rades eines Fahrrads (100) mit aktuellem Durchmesser erstreckt, das auf einer benachbarten Basis (4) der zweiten Serie platziert ist;
erste Pfosten (5) und Basen (3) der ersten Serie entlang der Längsträger (2) mit ersten Pfosten (6) und Basen (4) der zweiten Serie abwechselnd sind, um Parkplätze unterschiedlicher Höhe zu bilden, wobei Räume einer ersten Höhe mit Räumen einer zweiten Höhe abwechselnd sind.

3. Vorrichtung (1) nach Anspruch 1 oder Anspruch 2, **dadurch gekennzeichnet, dass** die jeweiligen Befestigungsmittel, die jede Basis (3, 4) zum Befestigen an den Längsträgern (2) umfasst, es ermöglichen, die Basis in zwei möglichen Montagepositionen dieser Basis an den Längsträgern (2) zu befestigen, von denen eine Position gegenüber der anderen umgekehrt ist.

4. Vorrichtung (1) nach einem der Ansprüche 1 bis 3, **dadurch gekennzeichnet, dass** jede Basis (3, 4) aus einem U-förmig gefalteten Blech besteht, d. h. eine Mittelwand bildet, in der die Aufnahmeöffnung (12) angeordnet ist, und zwei Seitenwände, die in der Einbaulage in unmittelbarer Nähe der Längsträger (2) angeordnet und an diesen befestigt sein sollen.

5. Vorrichtung (1) nach einem der Ansprüche 1 bis 4, **dadurch gekennzeichnet, dass** die Kanten jeder Basis (3, 4), die die vorderen und hinteren Längsenden der von dieser Basis gebildeten Aufnahmeöffnung (12) begrenzen, mit abgerundeten Abschnitten (7a, 7f) ausgestattet sind, wobei diese abgerundeten Abschnitte auf der Innenseite der Öffnung (12) in Bezug auf die Kanten leicht versetzt sind.

6. Vorrichtung (1) nach Anspruch 5, **dadurch gekennzeichnet, dass** die abgerundeten Abschnitte (7a, 7f) durch entsprechende Endabschnitte der gebogenen Stange (7) angeordnet sind, die an der Basis (3, 4) an den vorderen und hinteren Kanten der Aufnahme befestigt sind.

7. Vorrichtung (1) nach einem der Ansprüche 1 bis 6, **dadurch gekennzeichnet, dass** jeder erste Ständer (5, 6) die Form eines umgekehrten U-förmigen Bogens aufweist, dessen freie Enden an den Längsträgern (2) befestigt sind.

8. Vorrichtung (1) nach Anspruch 7, **dadurch gekennzeichnet, dass** der Bogen (5, 6) mit der gebogenen Stange (7) mittels einer an der gebogenen Stange befestigten Lasche (16) und eines Bolzens (18) verbunden ist, der durch ein Loch in der Lasche (16) und durch ein Loch in dem entsprechenden Zweig des Bogens (5, 6) verläuft.

9. Satz von Elementen zum Bilden der Vorrichtung nach einem der Ansprüche 1 bis 8, umfassend:
- Längsträger (2), die dazu bestimmt sind, gegen eine Fläche parallel zueinander angeordnet zu werden;
- eine Reihe von Basen (3, 4), die nacheinander an den beiden Längsträgern (2) befestigt sind, wobei jede Basis (3, 4) eine Öffnung (12) zur Aufnahme des unteren Teils eines Rades eines Fahrrads (100) vorsieht;
- eine Reihe von ersten Pfosten (5, 6), die nacheinander an den Längsträgern (2), abwechselnd an den Sockeln (3, 4) und derart befestigt sind, dass ein erster Pfosten (5, 6) unmittelbar benachbart zu einer ersten seitlichen Seite einer Basis (3, 4) angeordnet ist, wobei diese ersten Pfosten (5, 6) in der Lage sind, eine erste seitliche Stütze für das Rad eines Fahrrads (100) zu bilden, das in die Aufnahmeöffnung (12) eingreift;
- eine Reihe von zweiten Ständern (7), die direkt an den Sockeln (3, 4) befestigt sind; jeder zweite Ständer (7) ist angepasst, um eine zweite seitliche Stütze für das Rad eines Fahrrads (100) zu bilden, das in die Aufnahmeöffnung (12) eingreift, gegenüber der ersten seitlichen Stütze;
**dadurch gekennzeichnet, dass**:
- jeder zweite Ständer ist in Form einer gebogenen Stange (7) mit mehreren gebogenen Abschnitten, nämlich Umformen, angeordnet: einen ersten geneigten Abschnitt (7b), der sich im Wesentlichen von dem vorderen Ende der Aufnahmeöffnung (12) erstreckt, die durch die Basis (3, 4) gebildet wird, die dem zweiten Ständer zugeordnet ist, und dann, nach einem gebogenen Abschnitt, einen zweiten im Wesentlichen vertikalen Abschnitt (7c) bildet, der sich hinter dem hinteren Ende der Basis (3, 4) befindet, Absenken in Richtung der Basis, dann Bilden eines dritten im Wesentlichen horizontalen Abschnitts (7d) nach einem gebogenen Abschnitt, der sich ebenfalls über das hintere Ende der Basis (3, 4) hinaus befindet und sich entlang dieser erstreckt, und dann Bilden eines vierten geneigten Abschnitts (7e) nach einem gebogenen Abschnitt, der zu dem hinteren Ende der Basis (3, 4) zurückkehrt.
- die Mittel zur Befestigung der ersten Stützen (5, 6) und der Sockel (3, 4) an den Trägern (2) in der Form sind:
- von Löchern, die in diese ersten Stützen, Sockel und gegebenenfalls zweiten Stützen eingesetzt sind,
- eine Reihe von Löchern (11), die regelmäßig entlang der Längsträger (2) angeordnet sind, und
- von Schrauben (8), die geeignet sind, durch diese Löcher (11) eingerastet zu werden.

## Claims

1. A device (1) for parking bicycles (100), comprising:
- two longitudinal members (2), intended to be placed against a surface parallel to each other;
- a series of bases (3, 4) fixed on the two longitudinal members (2), in succession one after the other, each base (3, 4) providing an opening (12) for receiving the lower part of a wheel of a bicycle (100);
- a series of first uprights (5, 6) fixed on the longitudinal members (2) in succession to each other, alternately to the bases (3, 4) and in such a way that a first upright (5, 6) is arranged immediately adjacent a first lateral side of a base (3, 4), these first uprights (5, 6) being capable of forming a first lateral support for the wheel of a bicycle (100) engaged in said receiving opening (12), extending to above the axis of a wheel with a current diameter;
- a series of second uprights (7) fixed directly to the bases (3, 4), each second upright (7) being capable of forming a second lateral support for the wheel of a bicycle (100) engaged in said reception opening (12), opposite to said first lateral support;
**characterized in that** each second upright is arranged in the form of a bent rod (7) having several bent portions, namely forming: a first inclined portion (7b), extending substantially from the front end of said receiving opening (12) formed by the base (3, 4) associated with said second upright, and then, after a bent portion, forming a second substantially vertical portion (7c), located beyond the rear end of the base (3, 4), descending towards the base, then forming, after a bent portion, a third substantially horizontal portion (7d), also located beyond the posterior end of the base (3, 4) and extending along it, and then forming, after a bent portion, a fourth inclined portion (7e) returning to the said posterior end of the base (3, 4).

2. A device (1) according to claim 1, **characterized in that** it comprises:
- a first series of bases (3), having parts for fixing to the longitudinal members (2) having a first, reduced, height;
- a second series of bases (4), having parts for fixing to the longitudinal members (2) having a second height, greater than said first height;
- a first series of first uprights (5) intended to be associated with said first series of bases (3); each first upright (5) of this first series is formed by a part being separated and distinct from a base (3) of said first series of bases and is intended to be connected directly to the longitudinal members (2); each first upright (5) of this first series has a height in the order of 50 to 70 centimeters so that it extends to the level of the upper part of the wheel of a bicycle (100) of current diameter, placed on an adjacent base (3) of said first series; and
- a second series of first uprights (6) intended to be associated with said second series of bases (4); each first upright (6) of this second series is formed by a part being separated and distinct from a base (4) of said second series of bases and is intended to be connected directly to the longitudinal members (2); each first upright of this second series has a higher height than the first uprights (5) of said first series; each first upright (6) of this second series has a height in the order of 70 to 90 centimeters so that it extends to the level of the upper part of the wheel of a bicycle (100) of current diameter, placed on an adjacent base (4) of said second series;
first uprights (5) and bases (3) of said first series are, along the longitudinal members (2), alternated with first uprights (6) and bases (4) of said second series, in order to constitute parking spaces of different heights, spaces of a first height being alternated with spaces of a second height.

3. A device (1) according to claim 1 or claim 2, **characterized in that** the respective fixing means which each base (3, 4) comprises for fixing it to the longitudinal members (2) allow the base to be fixed in two possible mounting positions of this base on the longitudinal members (2), one position of which is reversed with respect to the other.

4. A device (1) according to one of claims 1 to 3, **characterized in that** each base (3, 4) consists of a U-shaped folded sheet, i. e. forming a central wall in which said reception opening (12) is arranged and two side walls intended, in the mounting position, to come in immediate proximity to the longitudinal members (2) and to be fixed to them.

5. A device (1) according to one of claims 1 to 4, **characterized in that** the edges of each base (3, 4) delimiting the anterior and posterior longitudinal ends of the receiving opening (12) formed by this base are equipped with rounded portions (7a, 7f), these rounded portions being slightly offset on the inside of the opening (12) with respect to said edges.

6. A device (1) according to claim 5, **characterized in that** said rounded portions (7a, 7f) are arranged by respective end portions of said bent rod (7), fixed to the base (3, 4) at the front and rear edges of said receiving opening (12).

7. A device (1) according to one of claims 1 to 6, **characterized in that** each first upright (5, 6) is in the form of an inverted U-shaped arch, the free ends of the legs of which are attached to said longitudinal members (2).

8. A device (1) according to claim 7, **characterized in that** said arch (5, 6) is connected to said bent rod (7) by means of a tab (16) fixed to said bent rod and of a bolt (18) passing through a hole in said tab (16) and through a hole arranged in the corresponding branch of the arch (5, 6).

9. A set of elements for constituting the device according to one of claims 1 to 8, comprising:
- longitudinal members (2) intended to be placed against a surface parallel to each other;
- a series of bases (3, 4) fixed on the two longitudinal members (2), in succession one after the other, each base (3, 4) providing an opening (12) for receiving the lower part of a wheel of a bicycle (100);
- a series of first uprights (5, 6) fixed on the longitudinal members (2) in succession to each other, alternately to the bases (3, 4) and in such a way that a first upright (5, 6) is arranged immediately adjacent to a first lateral side of a base (3, 4), these first uprights (5, 6) being capable of forming a first lateral support for the wheel of a bicycle (100) engaged in said reception opening (12);
- a series of second uprights (7) fixed directly to the bases (3, 4); each second upright (7) is adapted to form a second lateral support for the wheel of a bicycle (100) engaged in said reception opening (12), opposite said first lateral support;
**characterized in that**:
- each second upright is arranged in the form of a bent rod (7) having several bent portions, namely forming: a first inclined portion (7b), extending substantially from the front end of said receiving opening (12) formed by the base (3, 4) associated with said second upright, then, after a bent portion, forming a second substantially vertical portion (7c), located beyond the rear end of the base (3, 4), descending towards the base, then forming, after a bent portion, a third substantially horizontal portion (7d), also located beyond the rear end of the base (3, 4) and extending along it, then forming, after a bent portion, a fourth inclined portion (7e) returning to said rear end of the base (3, 4)
- the means for fixing the first uprights (5, 6) and the bases (3, 4) to the beams (2) are in the form:
- of holes fitted in these first uprights, bases and possibly second uprights,
- of series of holes (11) regularly arranged along the longitudinal members (2), and
- of bolts (8) suitable for being engaged through these holes (11).
